# EUROPEAN PATENT APPLICATION

(11) **EP 0 616 878 A1**
(43) Date of publication of application: **28.09.1994**
(21) Application number: 94500054.5
(22) Date of filing: 22.03.1994
(51) Int. Cl.: B29C 43/00, B29C 45/00, B27N 3/02, B27N 1/02, C08L 1/02, B29K 1/00, B29K 23/00, B29K 25/00, B29K 59/00, B29K 103/00, B29K 105/16, B29K 105/26

(54) **A process to manufacture an ecological and recyclable material for constructing various moulded objects and the material thus obtained**

(30) Priority: 23.03.1993 ES 9300590
(71) Applicant: ENVAS VEC-D'OR S.L., E-25150 Artesa de Lleida (Lleida) (ES)
(72) Inventor: Eusebio, Pico Oro, E-25150 Artesa de Lleida (Lleida) (ES)
(74) Representative: Christiansen, Henning, Dipl.-Ing.

(57) **Abstract**

The process comprises grinding the dried fruit skin, especially almond shell, to specific grain sizes, and mixing the same with stearic acid or paraffin, and thermoplastic derivatives, to yield a compression or injection mouldable material to obtain several objects, in particular packages, stoppers, furniture and the like, of an ecological and recyclable kind.

## Description

### SPECIFICATION

### FIELD OF THE INVENTION

The present Invention relates to a process to manufacture an ecological and recyclable material for constructing various moulded objects and the material thus obtained, adding a number of advantages to the function for which it is intended that shall be described hereinafter, in addition to other advantages inherent in its constitution.

### BACKGROUND OF THE INVENTION

A great many materials are currently known that can be shaped or moulded, called plastics, for instance polymers, which combined with other ingredients such as curing, strengthening, softening and other agents, make up a mixture that can be heat and pressure shaped or moulded.

There is therefore a large number of plastics that can be compression or injection moulded, applied mainly to such areas as packing materials, furniture and sundry industrial components.

These materials, so-called plastics, the result of processing matter that mankind has to hand, have contributed to a significant industrial development of humanity, and yet have contemporaneously created waste that is gradually building up on earth, damaging the environment. The seriousness of the problem has led to a collective worldwide awareness tending to try and achieve a reasonable balance between development and ecology.

The foregoing problem has increased research in an attempt at achieving ecological and recyclable materials, unlike traditional materials, to take their place advantageously in the various fields of industrial application.

### SUMMARY OF THE INVENTION

The applicant for this Invention has conceived a new ecological and recyclable material, designed to overcome the problems described in the foregoing section, using to such end a basic natural component obtained from dried fruit skin, preferably almond shells, which skins undergo a number of grinding and mixing processes with other ingredients, such as stearic acid, paraffins and several thermoplastic material derived products, in order to obtain a pressure or injection mouldable material to shape parts with an assorted geometry and size, depending upon the mould used.

The present Invention affords the foregoing advantages and others that shall be easily inferred from the embodiment that shall be described in detail hereinafter to make the understanding of the features set out above easier.

### DESCRIPTION OF AN EMBODIMENT OF THE INVENTION

The almond shell is ground to powder form with a grain size of between one and ten tenths. Stearic acid is added at a rate of 3/4 of a gramme per shell kilogramme, or else 1 gramme of paraffin per shell kilogramme. Any thermoplastic material derived component, such as polypropylene, polystyrene, acetalic resins and so forth, is added at a rate of 30% to 90% per shell kilogramme.

The said components undergo a mixing process in a 32,000 revolution mixer for a time ranging between one and five minutes.

The mixture yields a material that can be moulded under certain conditions, to manufacture packages, stoppers, bathroom or other kind of furniture, and sundry items.

To this end, the mixture the above-described process yields is laid upon a given mould having the intended shape and undergoes a pressure ranging between 800 and 1500 tonnes, and a temperature of between 160° and 200°.

Similarly, the said mixture is injected into a mould at a temperature of between 160° and 200° and a pressure ranging between 1700 kilogrammes and 3000 kilogrammes, the process time being 15 seconds.

## Claims

**1.-** A process to manufacture an ecological and recyclable material for constructing various moulded objects and the material thus obtained, characterised in that a first stage involves grinding the dried fruit skin to powder form: adding stearic acid or paraffin, together with thermoplastic material derived products, to the said powder form material; and a final stage involves mixing said components in a suitable mixer at 32,000 revolutions per minute, for a time ranging between one and five minutes, a material being obtained that can be compression moulded in moulds appropriate for the object to be achieved, under a pressure of between 800 and 1500 tonnes, and a temperature of between 160° and 200°, or injection moulded at a temperature of between 160° and 200° and a pressure of between 1700 kilogrammes and 3000 kilogrammes, the process time being 15 seconds.

**2.-** A process to manufacture an ecological and recyclable material for constructing various moulded objects and the material thus obtained, as in claim 1, characterised in that the material comprises almond shell ground to a grain size of between 1 and 10 tenths; 3/4 of a gramme of stearic acid per shell kilogramme; and polypropylene, polystyrene, acetalic resins and other thermoplastic family derivatives, at a rate of 30% to 90% per almond shell kilogramme.

**3.-** A process to manufacture an ecological and recyclable material for constructing various moulded objects and the material thus obtained, as in claim 2, characterised in that the material comprises almond shell ground to a grain size of between 1 and 10 tenths; 1 gramme of paraffin per shell kilogramme; and thermoplastic family derivatives, at a rate of 30% to 90% per almond shell kilogramme.
